## Europäisches Patentamt

(19) **European Patent Office**

**Office européen des brevets**

(11) Publication number: **0 022 678**
**B2**

(12) NEW EUROPEAN PATENT SPECIFICATION

(45) Date of publication of the new patent specification: **07.10.87**

(51) Int. Cl.⁴: **F 02 B 37/10**

(21) Application number: **80302380.3**

(22) Date of filing: **15.07.80**

(54) **Internal combustion engine turbochargers having auxiliary driving arrangements, and engines incorporating such turbochargers.**

(30) Priority: **16.07.79 US 57790**

(43) Date of publication of application:
**21.01.81 Bulletin 81/03**

(45) Mention of the opposition decision:
**01.09.82 Bulletin 82/35**

(45) Publication of the grant of the patent:
**07.10.87 Bulletin 87/41**

(84) Designated Contracting States:
**DE FR GB IT SE**

(56) References cited:
DE-A-1 751 941
DE-A-1 935 230
DE-B-1 180 192
DE-B-1 238 722
DE-B-1 526 457
DE-C- 974 736
FR-A-1 404 460
GB-A- 488 396
GB-A- 632 615
GB-A-1 095 898
US-A-2 368 033
US-A-2 417 224
US-A-2 968 914
US-A-3 389 554
US-A-3 473 322
US-A-3 869 866
US-A-3 921 403
US-A-4 083 188

(73) Proprietor: **THE GARRETT CORPORATION**
**9851-9951 Sepulveda Boulevard P.O. Box 92248**
**Los Angeles, California 90009 (US)**

(72) Inventor: **Byrne, Joe L.**
**3416 Del Amo Boulevard**
**Torrance California (US)**
Inventor: **Kobayashi, Robert J.**
**5739 Capeswood Drive**
**Rancho Palos Verdes California (US)**
Inventor: **Nancarrow, James H.**
**23621 Evalyn Avenue**
**Torrance California (US)**

(74) Representative: **Taylor, Duncan Alistair et al**
**KILBURN & STRODE 30 John Street**
**London WC1N 2DD (GB)**

EP 0 022 678 B2

## Description

### FIELD OF THE INVENTION

This invention relates to internal combustion engine exhaust-driven turbochargers which include auxiliary driving arrangements for supplying extra power to the compressor of the turbocharger, under circumstances when the engine exhaust gases do not contain sufficient energy for the turbocharger to run fast enough to supply the required engine charge air. Such circumstances arise, for example, when the engine is running under full load at low speed or when the engine is required to accelerate rapidly from a low engine speed. More specifically, the invention is concerned with auxiliary driving arrangements which are hydraulically powered.

### THE PRIOR ART

Turbochargers and turbocharger systems are already well known, and typically comprise a turbine wheel and a compressor wheel mounted on a common shaft. The turbine wheel and the compresor wheel are mounted within separate turbine and compressor housings, which in turn are mounted on a so-called centre housing including shaft bearings and lubricant circulation passages. Thr turbined housing is coupled to receive exhaust gases from the associated engine for driving the turbine wheel. The turbine thus drives the compressor wheel which compresses ambient air and supplies the compressed air, commonly referred to as charge air, to the engine.

An inherent limitation with turbochargers has been their inability to provide to the engine sufficient charge air during some conditions of engine operation. For example, the amount of charge air supplied to the engine by the turbocharger during low speed full load conditions, or during low speed, acceleration conditions is often insufficient to maintain the desired engine performance. This lack of charge air is caused by the low energy level of the engine exhaust gases under these conditions.

Various systems have already been proposed for supplying extra power to a turbocharger by means of a hydraulic system. For example, U.S. Patents Nos. 3,389,554, 3,473,322, 3,927,530 and 4,083,188 disclose various arrangements in which the shaft of the turbocharger receives extra power from a positive displacement type of hydraulic motor. This results in a relatively complex arrangement; also, the maximum speed at which a hydraulic motor of this type can run is relatively limited, and is certainly lower than the maximum speeds of 100,000 r.p.m. or more which are reached by modern turbochargers.

U.S. Patents Nos. 2,968,914 and 3,869,866, and British Patent No. 488,396 propose the use of a hydraulic turbine as an auxiliary driving device, connected directly to the shaft of the turbocharger. However, in so far as these prior proposals have suggested any particular form of hydraulic turbine, they have suggested using Pelton wheel type turbines. Turbines of this type operate with the rotor of the turbine rotating in a space which is largely full of air, with a free jet of driving liquid impinging on the rotor. High speed operation of such a turbine will result in the generation of large quantities of a foamy mixture of air and hydraulic fluid which does not separate out very rapidly. The fluid cannot be recirculated to the turbine wheel or to other system components while still in this foamy state. This is particularly disadvantageous when the hydraulic fluid is shared with another fluid system, such as an engine lubrication system. Moreover, even when free-wheeling with the turbocharger, Pelton-type turbine wheels may not be capable of withstanding the high rotational speeds achieved by modern turbochargers. Presumably, for this reason, some of the previously proposed systems include clutches allowing the hydraulic turbine to be disconnected from the turbocharger.

According to one aspect of the present invention, an exhaust-driven turbocharger for an internal combustion engine, includes an exhaust driven turbine and a hydraulic motor unit and a compressor jointly driven by said turbine and said motor unit, a low pressure lubricating pump forming part of, and circulating oil in a low pressure circuit including a supply to the bearings of the compressor and turbine, a high pressure pump forming part of, and supplying oil in a high pressure circuit including the hydraulic motor unit the intake of the high pressure pump being from the delivery of the low pressure pump, and any pressure maintained in the low pressure circuit to produce a lubricating flow through the bearings also acting as a back pressure to the hydraulic motor unit; characterised in that the hydraulic motor unit comprises a hydraulic turbine housed within a substantially closed chamber which, at least when the hydraulic turbine is in operation, is full of the driving fluid, and the conduit leading out of the closed chamber leads into the lubricating fluid supply conduit through a non-return valve preventing flow from the lubricating fluid supply conduit into the closed chamber.

In the preferred embodiment, the hydraulic turbine includes one or more nozzles arranged to produce jets of driving fluid having components of velocity in the directions axial and circumferential of the rotor of the hydraulic turbine. That is to say, the turbine is an axial flow type turbine.

The invention also provides, according to a second aspect, an internal combustion engine having a turbocharger according to the first aspect of the invention, in which engine the driving fluid for the hydraulic turbine is drawn from a hydraulic system of the engine. Normally, this system will include a highpressure pump for supplying the hydraulic turbine, since the pressure required for this purpose is considerably greater than for most other functions performed by the hydraulic system, such as lubrication.

BRIEF DESCRIPTION OF THE DRAWINGS

Figure 1 is a schematic diagram illustrating an engine and turbocharger system embodying the present invention;

Figure 2 is a vertical section through part of the turbocharger of Figure 1;

Figure 3 is a perspective view, partially exploded, of a hydraulic motor unit in the form of a hydraulic turbine and associated hydraulic nozzle forming part of the turbocharger of Figures 1 and 2;

Figure 4 is a vertical section taken on the line 4—4 of Figure 2, showing only part of the turbocharger, to a somewhat reduced scale;

Figure 5 is an end view of the hydraulic nozzle, taken on the line 5—5 of Figure 3;

Figure 6 is a horizontal section taken on the line 6—6 of Figure 3;

Figure 7 is a slightly enlarged vertical section of the hydraulic nozzle of Figure 3;

Figure 8 is an enlarged perspective view of a part of the hydraulic turbine; and

Figure 9 is a schematic diagram illustrating a second form of engine and turbocharger system embodying the invention.

DETAILED DESCRIPTION OF THE PREFERRED EMBODIMENT

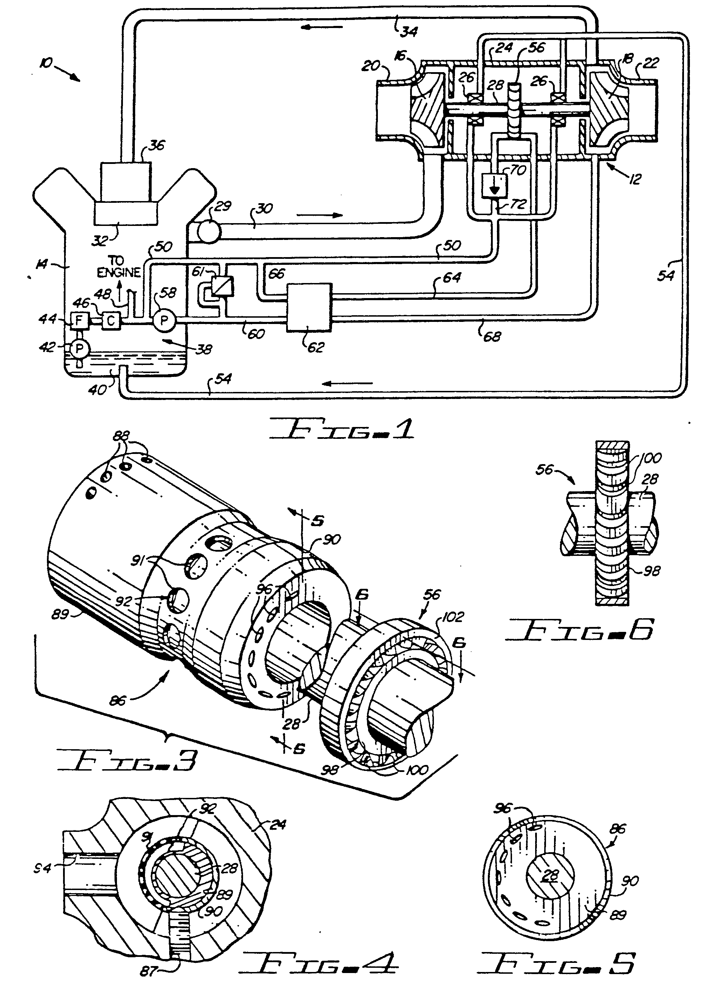

Figure 1 shows an engine and turbocharger system 10, comprising an internal combustion engine 14, and a turbocharger 12 for supplying charge air to the engine 14. The turbocharger 12 includes a turbine wheel 16 and a compressor wheel 18 respectively received within turbine and compressor housings 20 and 22. The turbine and compressor housings 20 and 22 are interconnected by a centre housing 24, which contains bearings 26 rotatably supporting a shaft 28 on which the turbine wheel 16 and the compressor wheel 18 are both mounted.

In operation, the turbine wheel 16 is driven by exhaust gases from the engine 14 which are supplied to the turbine wheel via an exhaust manifold 29 and an exhaust conduit 30. The turbine wheel 16 in turn drives the shaft 28 and the compressor wheel 18, so that the compressor wheel 18 draws in and compresses ambient air. This compressed air is supplied to the intake manifold 32 of the engine 14 via a charge air conduit 34. A charge air cooler 36 may be provided in the conduit 34 to cool the compressed charge air so as to reduce the total heat load of the engine and to increase further the density of the charge air. By increasing the density of the charge air thus supplied to the engine 14, the turbocharger 12 enables the engine 14 to operate with an improved performance and an improved efficiency level.

The engine 14 includes a hydraulic fluid system 38 which, among other functions, circulates fluid continually through the turbocharger bearings 26 for lubricating purposes. The fluid may be the engine oil, although this is not essential. As shown in Figure 1, the hydraulic system 38 includes a reservoir 40 of hydraulic fluid or oil within the engine, and a low pressure oil pump 42 for pumping oil from the reservoir 40, through an oil filter 44 and an oil cooler 46, to various points in the engine 14 through a conduit 48 and to the turbocharger 12 through a conduit 50. The oil supplied to the turbocharger 12 is led into the centre housing 24 of the turbocharger 12 for supply to the turbocharger bearings 26 via a network of internal passages (not shown in Figure 1) formed in the centre housing. The oil, on leaving the bearings 26, is collected into a return conduit 54, in this example by a gravity-drain system, and is returned to the engine oil reservoir 40 by the return conduit 54.

The turbocharger 12 also includes a hydraulic motor unit in the form of a hydraulic turbine 56 for supplementally driving the turbocharger comprssor wheel 18 during certain conditions of engine operation, and, in particular, when the conditions are such that the engine exhaust gases are incapable of driving the turbine wheel 16 and compressor wheel 18 at a speed sufficient to supply the engine 14 with sufficient charge air. For example, the turbine 56 may be used to drive the compressor wheel 18 under relatively low speed, full load conditions, when the available energy in the exhaust gases is relatively low, or under relatively low speed, acceleration conditions when there is otherwise insufficient excess charge air available to accommodate a rapid change in operating conditions.

As illustrated in Figure 1, the hydraulic turbine 56 is mounted within the centre housing 24 directly upon the turbocharger shaft 28, between the bearings 26. The turbine 56 is hydraulically driven by high pressure fluid or oil from the engine hydraulic system 38. To supply this high pressure fluid, the hydraulic system 38 includes a high pressure pump 58 which is, in the example, driven by the engine 14. The high pressure pump 58 has its intake coupled to the engined hydraulic system 38, conveniently at the discharge side of the low pressure pump 42. The high pressure pump 58 supplies the higher pressure oil to a high pressure supply conduit 60 coupled directly to a control valve 62, which has two positions: in one of the positions, the valve 62 couples the high pressure oil flow to the hydraulic turbine 56 via a line 64, while in the other position, the valve 62 returns the output of the high pressure pump 58 to the engine hdyraulic system 38 through a by-pass circuit 66, to unload the pump 58 substantially completely. The high pressure supply conduit 60 is also connected to a one-way relief valve 61, whose discharge is connected to the bearing supply conduit 50, to prevent excessive system oil pressures.

The valve 62 is controlled in response to operating parameters of the turbocharger system 10 to control the operation of the hydraulic turbine 56. In the illustrated control scheme for the control valve 62, the valve 62 is connected with the discharge pressure of the turbocharger compressor wheel 18 by means of a pressure control line 68. When the compressor discharge pressure is at or above a predetermined minimum threshold, the control valve 62 adopts the position in which it returns the output of the high pressure pump 58 to the hydraulic system 38 via the bypass return conduit 66. In this event, sufficient oil back pressure corresponding with the discharge pressure of the low pressure pump 42 is available in the turbocharger bearing supply conduit 50 to maintain a relatively small oil flow, of the order of four litres per minute, to the turbocharger bearings 26 for lubrication purposes. This bearing lubrication oil circulates through the centre housing 24, lubricating the bearings 26, and then returns to the engine oil system 38 via the main return conduit 54.

If the compressor discharge pressure should fall below the predetermined threshold valve, the control valve 62 automatically changes position to couple the output of the high pressure pump 58 directly to the hydraulic turbine 56 through the high pressure supply line 64. The high pressure oil flow rapidly accelerates the hydraulic turbine 56, together with the turbocharger shaft 28 and the compressor wheel 18, to increase substantially the pressure level of the compressor discharge charge air. This effectively provides the engine 14 with additional charge air to allow the engine 14 to operate at high power, in spite of the inability of the engine exhaust gases to supply sufficient energy to the turbine wheel 16.

The high pressure oil is circulated through the hydraulic turbine 56 at a relatively high flow rate and pressure, for example, at about 45 litres per minute and 110 bars. During operation of the turbine 56, the oil flowing through the turbine does not come into contact with air; this largely prevents foaming of the oil. The high pressure oil is also maintained separate from the bearing oil circulation path to prevent flooding of the bearings 26, even though the high pressure oil is supplied to the hydraulic turbine 56 at a relatively high flow rate. As illustrated in Figure 1, the oil drains from the hydraulic turbine 56 through a one-way check valve 70 and a drain conduit 72 to the turbocharger bearing supply conduit 50. With this configuration, an oil flow returning to the engine hydraulic system 38 is maintained in the conduit 50, and maintains a sufficient back pressure to ensure a small oil flow through the nearing oil supply network within the centre housing 24 to maintain bearing lubrication. Of course, the check valve 70 prevents the bearing supply flow from communicating with the hydraulic turbine 56 when the turbine 56 is not being driven by high pressure oil.

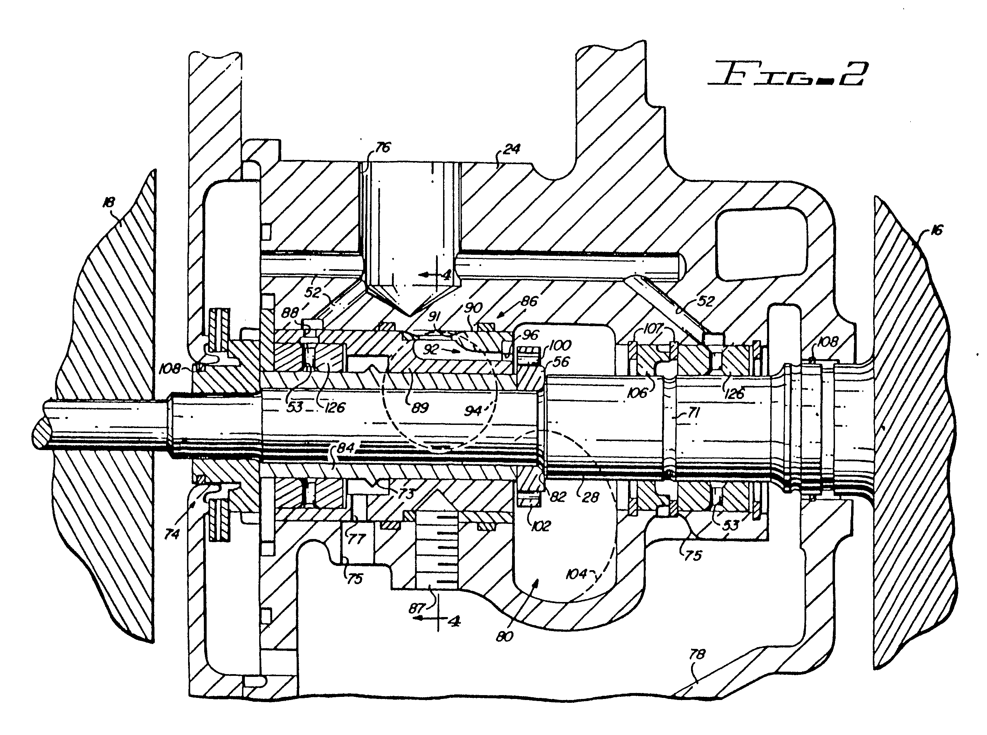

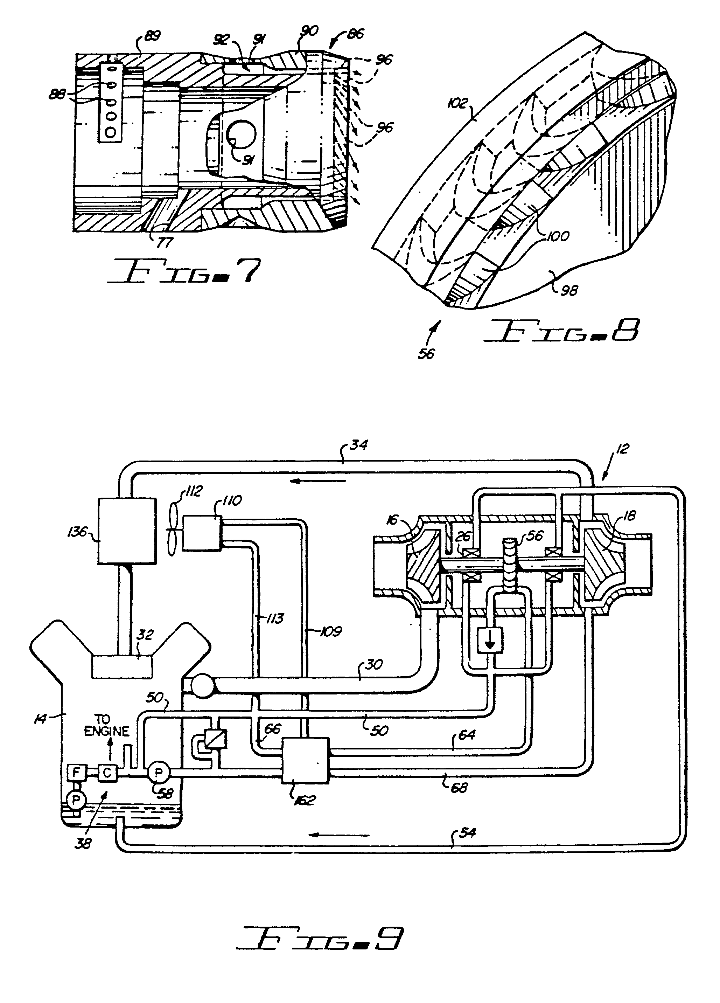

The construction of the turbocharger centre housing 24 and of the hydraulic turbine 56 is shown in detail in Figures 2 to 8. The bearings 26 supporting the shaft 28 comprise, as shown in Figure 2, a thrust bearing assembly 74, and a pair of sleeve-type journal bearings 126. The journal bearings 126 are supplied with lubricating oil through an oil inlet port 76 which is coupled to the bearing supply conduit 50 (not shown in Figure 2). The oil supplied to the port 76 is led to the bearings via the internal supply passage network, which is shown at 52, and via holes 53 formed in the bearing sleeves 126. From there, the oil drains gravitationally through openings 75 to the bearing oil return line 54 (not shown in Figure 2) via a sump 78.

As shown in Figure 2, the hydraulic turbine 56 is carried on the shaft 28 within a flow chamber 80. More specifically, the hydraulic turbine 56 is positioned against a shoulder 82 on the shaft 28, and is held in place by a sleeve 84 which is in turn retained in position by a thrust collar of the thrust bearing assembly 74. This sleeve 84 forms the journal of the left-hand journal bearing 126. The high pressure oil is directed to impinge on the hydraulic turbine 56 by nozzles formed in a generally cylindrical nozzle body 86; a tubular leftwards extension of the nozzle body 86 also forms the housing for the left-hand journal bearing 126. This tubular extension includes holes 88, to permit the flow of lubricating oil to the bearing 126, and a drain opening 77 registering with the adjacent bearing drain opening 75.

The nozzle body 86 has a two-part construction, consisting of an inner portion 89 and an outer portion 90. The inner portion 89 is fixed in position in the centre housing 24 by a set screw 87, and, in this example, is fixed to the outer portion 90 by brazing, to define, between the inner and outer portions, a generally semi-annular chamber 92 (see Figure 4). The chamber 92 communicates via a plurality of flow openings 91 in the outer portion 90 with a high pressure oil inlet port 94 coupled to the high pressure supply conduit 64 (not shown in Figure 2) for receiving high pressure oil. The high pressure oil supplied to the chamber 92 flows out of the chamber 92 via a plurality of nozzles 96 arranged in a semi-circle. As Figure 7 shows these nozzles 96 are all skewed with respect to the axis of the shaft 28, so that the oil discharged from the nozzles impinges on the hydraulic turbine 56 with a circumferential component of velocity. In the present example, the nozzles 96 are angles at about 75° to the axis of the shaft 28.

The hydraulic turbine 56 comprises a central disc 98, and a plurality of blades 100 extending radially outwardly from the disc 98. These blades 100, as shown in Figures 3, 6, and 8, have a generally U-shaped configuration, and are so arranged that the angled oil jets from the nozzles 96 impinge on the concave side of the blades 100. A circumferential shroud 102 is formed integrally about the radially outer ends of the blades 100, to improve the effect of the oil jets in driving the blades 100.

In operation of the sytem 10, if the pressure of the charge air supplied by the compressor wheel 18 should drop below the predetermined threshold, high pressure oil will be supplied to the nozzles 96, to drive the hydraulic turbine 56. The oil driving the turbine 56 almost immediately floods the centre housing flow chamber 80, so that the hydraulic turbine 56 operates in a nonventilated flooded environment. Thus, foaming or frothing of the oil is not possible. The oil leaves the chamber 80 via an outlet port 104 coupled to the bearing oil supply line 50 (Figure 1). The relative sizes of the inlet and outlet ports 94 and 104, together with the back pressure on the chamber 80 resulting from the presence of low pressure oil in conduit 50, ensure substantially immediate flooding of the flow chamber 80 when the turbine 56 is brought into operation. The air in the flow chamber 80 is forced by the incoming flooding oil outwardly from the chamber 80 in both directions along the shaft 28. That is, the air is forced between the sleeve 84 and the nozzle body 86 for escape through the drain openings 75 and 77, and in the other direction past a divider ring 106 securing in position by retaining rings 107, for escape through the other drain opening 75. During supply of high pressure oil to the nonventilated hydraulic turbine 56, some oil may lead from the flow chamber 80 in both directions along the shaft 28. To deal with this leakage, the sleeve 84 includes a slinger 73 aligned with the drain openings 75 and 77 for radially pumping any such leaking oil through the openings 75 and 77 to the sump 78. Similarly, a slinger contour 71 is formed on the shaft 28, between the divider ring 106 and the right-hand bearing sleeve 126, and pumps any leaking oil through the adjacent drain opening 75 to the sump 78. Both the slinger 73 and the slinger contour 71 are positioned inboard of the journal bearings 126, so as guard against flooding of these bearings.

When the high pressure oil flow to the hydraulic turbine 56 ceases, the remaining oil in the flow chamber 80 is rapidly pumped out of the chamber, to allow the turbine 56 to freewheel with the turbocharger shaft 28 without significant resistance losses. More specifically, the oil remaining in the chamber 80 is pumped out of the chamber in both directions along the shaft 28 towards the journal bearings 126 by the spinning action of the shaft 28 and the hydraulic turbine 56, still without contacting the turbocharger bearings 126. Accordingly, during all conditions of operation, the turbocharger journal bearings 126 and the thrust bearing assembly 74 are lubricated solely by the oil supplied via the passage network 52. Seal rings 108 are positioned at opposite ends of the shaft 28 to prevent any of this oil from leaking into either the turbine housing 20 or the compressor housing 22.

A second embodiment of the invention is illustrated schematically in Figure 9, in which components identical to those shown in Figures 1 to 8 are designated by the same reference numerals. In this embodiment, a modified control valve 162 has a position in which it couples the high pressure oil from the high pressure pump 58 through a conduit 109 to a hydraulic motor 110 coupled to drive a fan 112. The high pressure oil thus causes the fan 112 to force large quantities of cooling ambient air across cooling surface areas of a charge air cooler heat exchanger 136, before returning to the bearing supply line 50 via a return conduit 113. With this arrangement, the cooling capacity of the charge air heat exchanger 136 is better than the cooling capacity of the heat exchanger 36 of Figure 1, so that the temperature level of the charge air supplied to the engine 14 is further reduced. The need for improved charge air cooling normally arises when large quantities of charge air are supplied to the engine, that is to say, at relatively high boost levels of turbocharger operation. Therefore, the additional charge air cooling is required primarily when sufficient charge air is available without operation of the turbine 56, and is not required when supplemental driving of the turbocharger is needed. Thus, the control valve 162 operates to supply the high pressure oil to the turbocharger 12 under some engine operating conditions for driving the hydraulic turbine 56, and to the hydraulic motor 110 for driving the charge air cooling fan 112 under other engine operating conditions. The valve 162 may still, if required, have a position in which it bypasses the high pressure oil to the bearing supply conduit 50 through the line 66, so that the pump 58 can be unloaded during some conditions of engine operation.

Many variations on the described embodiments are possible. The invention is applicable to both four-stroke internal combustion engines, and two-stroke internal combustion engines. With two-stroke engines, the control scheme for the control valves 62 and 162 may be so designed that the conventional scavenging blower may be eliminated. Also, the nozzle body 86 shown particularly in Figures 2 to 7 may be modified to include nozzles 96 occupying a full circle. These nozzles 96 may be divided into groups for association with two or more chambers 92 which may in turn be coupled to separately controlled high pressure fluid supply conduits.

**Claims**

1. An exhaust driven turbocharger for an internal combustion engine including an exhaust driven turbine and a hydraulic motor unit (56, 156) and a compressor jointly driven by said turbine and said motor unit, a low pressure lubricating pump (42) forming part of, and circulating oil in a low pressure circuit (50, 52, 77, 75) including a supply to the bearings (26, 74, 126) of the compressor and turbine, a high pressure pump (58) forming part of, and supplying oil in a high pressure circuit including the hydraulic motor unit (56) the intake of the high pressure pump (58) being from the delivery of the low pressure pump (42), and any pressure maintained in the low pressure circuit to produce a lubricating flow through the bearings also acting as a back pressure to the hydraulic motor unit; characerised in that the hydraulic motor unit comprises a hydraulic turbine (56) housed within a substantially closed chamber (80) which, at least when the hydraulic turbine is in operation, is full of the driving fluid, and the conduit (104) leading out of the closed chamber (80) lead into the lubricating fluid supply conduit (50, 52) through a non-return valve (70) preventing flow from the lubricating fluid supply conduit (50, 52) into the closed chamber (80).

2. A turbocharger as claimed in Claim 1 including a common housing (24) for the compressor and turbine bearings (26, 74, 126) and the chamber (80) for the hydraulic turbine.

3. A turbocharger as claimed in Claim 2 which also includes means (71, 73) arranged to pump out of the closed chamber (80) the driving fluid present in the chamber (80) when operation of the hydraulic turbine (56) ceases.

4. A turbocharger as claimed in any one of the preceding claims, which includes a common shaft (28) carrying the exhaust-driven turbine (16) at one end, and the charge air compressor (18) at the other end, and the hydraulic turbine (56) comprises a turbine wheel directly mounted on the shaft (28), between the turbine (16) and the compressor (18).

5. A turbocharger as claimed in Claim 3 and Claim 4 which includes bearings (26, 74, 126) for the shaft (28) and in which the pumping means (71, 73) also serves to prevent any leakage of driving fluid from the closed chamber (80) along the shaft (28) from reaching the bearings (26, 74, 126).

6. A turbocharger as claimed in any one of Claims 3—5 in which the pumping means (71, 73) comprises one or more slinger contours formed on the shaft (28).

7. A turbocharger as claimed in any one of the preceding claims in which the hydraulic turbine (56) includes one or more nozzles (96) arranged to produce jets of driving fluid having components of velocity in the directions axial and circumferential of the rotor of the hydraulic turbine (56).

8. A turbocharger as claimed in Claim 7, in which the rotor of the hydraulic turbine (56) has blades (100) which are generally U-shaped, when seen along a radial direction, the jets of driving fluid from the nozzles (96) being directed towards the concave sides of the blades (100).

9. A turbocharger as claimed in Claim 8 in which the rotor of the hydraulic turbine (56) also has a circumferential shroud (102) surrounding the blades (100).

10. A turbocharger system for an internal combustion engine (14), which system includes a turbocharger (12) as claimed in any of the preceding claims, and a valve (62, 162) connected to control the supply of driving fluid to the hydraulic turbine (56), the valve (62, 162) being arranged to supply driving fluid to the hydraulic turbine (56) when the turbocharger (12) would otherwise be incapable of supplying sufficient charge air.

11. A turbocharger system as claimed in Claim 10 in which the control valve (62, 162) is arranged to be sensitive to the pressure of the charge air supplied by the turbocharger (12) and to supply driving fluid to the hydraulic turbine (56) whenever the charge air presure falls below a threshold value.

12. A turbocharger as claimed in Claim 10, or Claim 11, which also includes a cooler (136) connected to cool the charge air supplied by the turbocharger (12), and a fan (112) driven by a hydraulic motor (110) and arranged to direct a flow of cooling air over the cooler (136), the hydraulic motor (110) being connected to be driven, if required, during periods when the hydraulic turbine (56) is not being driven, by the pressurised driving fluid which would otherwise be supplied to the hydraulic turbine (56).

13. An internal combustion engine (14) having a turbocharger (56) as claimed in any of the preceding claims, in which the driving fluid for the hydraulic turbine (56) is drawn from a hydraulic system of the engine (14).

14. An engine as claimed in Claim 13, in which the hydraulic system of the engine (14) supplies lubricant to parts of the engine, in addition to supplying driving fluid to the hydraulic turbine (56).

**Patentansprüche**

1. Abgasgetriebener Turbolader für eine Brennkraftmaschine mit einer abgasgetriebenen Turbine und einer Hydraulikmotoreinheit (56, 156) sowie einem Kompressor, der von der Turbine und der Motoreinheit gemeinsamn angetrieben wird, einer Niederdruckschmierpumpe (42), die einen Teil eines Niederdruckkreises (50, 52, 77, 75) bildet, in welchem Öl in in Umlauf gesetzt sowie Öl in die Lager (26, 74, 126) des Kompressors und der Turbine eingespeist wird, einer Hochdruckpumpe (58), die einen Teil eines Hochdruckkreises bildet und Öl in diesen die Hydraulikmotoreinheit (56) aufnehmenden Hochdruckkreises einspeist, wobei der Einlaß der Hockdruckpumpe (58) aus . der Abgabe der Niederdruckpumpe (42) stammt und jeder im Niederdruckkreis aufrechterhaltene Druck zur Erzeugung eines Schmiermittelflusses durch die Lager ferner als Rückdruck in die Hydraulikmotoreinheit dient, dadurch gekennzeichnet, daß die Hydraulikmotoreinheit eine Hydraulikturbine (56) aufweist, die innerhalb einer im wesentlichen geschlossenen Kamner (80) angeordnet ist, die zumindest im Betrieb der Hydraulikturbine mit der Antriebsfluid gefüllt ist, und daß die Leitung (104), die aus der geschlossenen Kammer (80) führt, in die Schmiermittelfluid-Speiseleitung (50, 52) über ein Rückschlagventil (70) führt, das den Fluß von der Schmiermittelfluid-Speiseleitung (50, 52) in die geschlossene Kammer (80) verhindert.

2. Turbolader nach Anspruch 1, mit einem gemeinsamen Gehäuse (24) für die Kompressor; und Turbinenlager (26, 74, 126) sowie die Kammer (80) für die Hydraulikturbine.

3. Turbolader nach Anspruch 2, dadurch gekennzeichnet, daß eine Vorrichtung (71, 73) vorgesehen ist, die das in der Kammer (80) vorhandene antreibende Strömungsmittel aus der geschlossenen Kammer (80) auspumpt, wenn der Betrieb der Hydraulikturbine (56) endet.

4. Turbolader nach einem der Ansprüche 1 bis 3, dadurch gekennzeichnet, daß eine gemeinsame Welle (28) vorgesehen ist, die die abgasgetriebene Turbine (16) am einen Ende und den Ladeluftkompressor (18) am anderen Ende aufnimmt, und daß die Hydraulikturbine (56) ein Turbinenrad besitzt, das direkt auf der Welle (28) zwischen Turbine (16) und Kompressor (18) befestigt ist.

5. Turbolader nach Anspruch 3 oder 4, dadurch gekennzeichnet, daß Lager (26, 74, 126) für die Welle (28) vorgesehen sind, und daß die Pumpvorrichtung (71, 73) auch dazu dient, zu verhindern, daß aus der geschlossenen Kammer (80) längs der Welle (28) austretendes anreibendes Strömungsmittel die Lager (26, 74, 126) erreicht.

6. Turbolader nach einem der Ansprüche 1 bis 5, dadurch gekennzeichnet, daß die Pumpvorrichtung (71, 73) ein oder mehrere auf der Welle (28) ausgebildete Spritzringkonturen aufweist.

7. Turbolader nach einem der Ansprüche 1 bis 6, dadurch gekennzeichnet, daß die Hydraulikturbine (56) eine oder mehrere Düsen (96) aufweist, die so ausgebildet sind, daß sie Strahlen des antreibenden Strömungsmittels erzeugen, die Geschwindigkeitskomponenten in axialer und in Umfangsrichtung in bezug auf den Rotor der Hydraulikturbine (56) haben.

8. Turbolader nach Anspruch 7, dadurch gekennzeichnet, daß der Rotor der Hydraulikturbine (56) Blätter (100) aufweist, die längs einer radialen Richtung gesehen etwa U-förmig ausgebildet sind, wobei die Strahlen des antreibenden Strömungsmittels aus den Düsen (96) gegen die konkaven Seiten der Blätter (100) gerichtet sind.

9. Turbolader nach Anspruch 8, dadurch gekennzeichnet, daß der Rotor der Hydraulikturbine (56) eine in Umfangsrichtung verlaufende Abdeckung (102) besitzt, die die Blätter (100) umgibt.

10. Turboladersystem für eine Brennkraftmaschine (14), das einen Turbolader (12) nach einem der vorausgehenden Ansprüche aufweist, und das ein Ventil (62, 162) besitzt, das so angeschlossen ist, daß es die Einspeisung antreibenden Strömungsmittels in die Hydraulikturbine (56) steuert, wobei das Ventil (62, 162) so ausgelegt ist, daß es antreibenes Strömungsmittel in die Hydraulikturbine (56) einspeist, wenn der Turbolader sonst nicht in der Lage wäre, genügend Ladeluft einzuführen.

11. Turboladersystem nach Anspruch 10, dadurch gekennzeichnet, daß das Steuerventil (62, 162) so ausgelegt ist, daß es auf den Druck der vom Turbolade (12) eingespeisten Ladeluft anspricht, und antreibendes Strömungsmittel in die Hydraulikturbine (56) einspeist, wenn der Ladeluftdruck unter einen Schwellwert fällt.

12. Turboladersystem nach Anspruch 10 oder 11, dadurch gekennzeichnet, daß ein Kühler (136) zur Kühlung der von dem Turbolader (12) eingespeisten Ladeluft eingeschaltet ist, und daß ein von einem Hydraulikmotor (110) angetriebenes Gebläse so ausgelegt und angeordnet ist, daß es einen Strom von Kühlluft über den Kühler (136) führt, wobei der Hydraulikmotor (110) erforderlichenfalls während der Perioden, in denen die Hydraulikturbine (56) nicht angetrieben ist, durch das druckaufgeladene antreibende Strömungsmittel, das sonst in de Hydraulikturbine (56) eingeführt ist, angetrieben wird.

13. Brennkraftmaschine (14) mit einem Turbolader (56) nach einem der Ansprüche 1 bis 12, bei dem das antreibende Strömungsmittel für die Hydraulikturbine (56) einem Hydrauliksystem der Maschine (14) entnommen ist.

14. Brennkraftmaschine nach Anspruch 13, dadurch gekennzeichnet, daß das Hydrauliksystem der Maschine (14) Schmiermittel in Teile der Maschine zusätzlich zur Einspeisung von antreibenden Strömungsmittel in die hydraulische Turbine (56) einspeist.

## Revendications

1. Turbo-compresseur d'échappement pour un moteur à combustion interne, comportant une turbine entraînée par l'échappement et un moteur hydraulique (56, 156), et un compresseur entraîné en conjugaison par ladite turbine et par le moteur hydraulique, une pompe à huile à basse pression (42) faisant partie d'un circuit à basse pression (50, 52, 77, 75) dont elle fait circuler l'huile, comprenant une alimentation des paliers (26, 74, 126) du compresseur et de la turbine, une pompe à haute pression (58) faisant partie d'un circuit à haute pression, et alimentant en huile ce circuit qui comprend le moteur hydraulique (56), l'aspiration de la pompe à haute pression (58) étant alimentée par le refoulement de la pompe à basse pression (42), et toute pression maintenue dans le circuit à basse pression pour produire un écoulement de lubrification dans les paliers constituant aussi une contre-pression à l'égard du moteur hydraulique; caractérisé en ce que le moteur hydraulique comporte une turbine hydraulique (56) logée dans une chambre sensiblement fermée (80), laquelle, au moins lorsque la turbine hydraulique est en fonctionnement, est remplie de fluide d'entraînement, et en ce que la canalisation de sortie (104) de la chambre fermée (80) aboutit à la canalisation d'alimentation (50, 52) du fluide de lubrification, en passang à travers une soupape anti-retour (70) qui empêche le fluide de lubrification de la canalisation d'alimentation (50, 52) de s'écouler dans la chambre fermée (80).

2. Turbo-compresseur selon la revendication 1, caractérisé en ce qu'il comporte un carter commun (24) pour les paliers (26, 74, 126) du compresseur et de la turbine, et pour la chambre (80) de la turbine hydraulique.

3. Turbo-compresseur selon la revendication 2, caractérisé en ce qu'il comporte en outre des moyens (71, 73), pour évacuer par pompage hors de la chambre fermée (80) le fluide servant à entraîner la turbine hydraulique (56) et se trouvant contenu dans la chambre (80), lorsque cesse le fonctionnement de la turbine hydralique (56).

4. Turbo-compresseur selon l'une des revendications 1 à 3, caractérisé en ce qu'il comporte un arbre commun (28) portant à une extrémité la turbine d'échappement (16), et à une autre extrémité la compresseur de suralimentation (18), et en ce que la turbine hydraulique (56) comporte une roue de turbine montée directement sur l'arbre (28), entre la turbine (16) et le compresseur (18).

5. Turbo-compresseur selon l'une des revendications 3 ou 4, caractérisé en ce qu'il comporte des paliers (24, 74, 126) pour l'arbre (28), et en ce que les moyens de pompage (71, 73) servent aussi à empêcher toute fuite de fluide d'entraînement sortant de la chambre (80) le long de l'arbre (28) d'atteindre les paliers (26, 74, 126).

6. Turbo-compresseur selon l'une des revendications 3 à 5, caractérisé en ce que les moyens de pompage (71, 73) comportent au moins un élément d'éjection par effet centrifuge, tel qu'une nervure annulaire ou une gorge annulaire, ménagé sur l'arbre (28).

7. Turbo-compresseur selon l'une des revendications 1 à 6, caractérisé en ce que la turbine hydraulique (56) comporte au moins une tuyère (96) agencée pour projeter au moins un et de fluide d'entraînement dont la vitesse présente des composantes respectivement orientées axialement et tangentiellement par rapport au rotor de la turbine hydraulique (56).

8. Turbo-compresseur selon la revendication 7, caractérisé en ce que le rotor de la turbine hydraulique (56) comporte des ailettes (100), de profil sensiblement en U en projection radiale, les jets de fluide d'entraînement projetés par les tuyères (96) étant dirigés vers les faces concaves des ailettes (100).

9. Turbo-compresseur selon la revendication 8, caractérisé en ce que le rotor de la turbine hydraulique comporte en outre une enveloppe périphérique (102) qui entoure les ailettes (100).

10. Système de turbo-compresseur pour un moteur à combustion interne (14), caractérisé en ce qu'il comporte un turbo-compresseur conforme à l'une quelconque des revendications précédentes, et une vanne (62, 162) pour régler l'alimentation de la turbien hydraulique (56) en fluide d'entraînement, la vanne (62, 162) étant agencée pour faire arriver le fluide d'entraînement à la turbine hydraulique (56) lorsque le turbo-compresseur (12) est par ailleurs incapable de fournir un débit suffisant d'air de suralimentation.

11. Système de turbo-compresseur selon la revendication 10, caractérisé en ce que la vanne de régulation (62, 162) est agencée pour se trouver asservie à la pression de l'air de suralimentation fourni par le turbo-compresseur (12), et pour alimenter la turbine hydraulique (56) en fluide d'entraînement chaque fois que la pression de l'air de suralimentation tombe en-dessous d'une valeur prédéterminée constituant un seuil de consigne.

12. Système de turbo-compresseur selon la revendication 10 ou la revendication 11, caractérisé en ce qu'il comporte en outre un échangeur thermique de refroidissement (136), agencé de manière à refroidir l'air de suralimentation débité par le turbo-compresseur (12), et un ventilateur (112) entraîné par un moteur hydraulique (110) pour souffler un courant d'air de refroidissement dans l'échangeur (136), le moteur hydraulique (110) étant monté de manière à être actionné, à la demande, au cours des périodes où la turbine hydraulique (56) ne fonctionne pas, par le fluide d'entraînement sous pression prévu pour alimenter la turbine hydraulique (56) en dehors des périodes d'inaction de celle-ci.

13. Moteur à combustion interne (14), caractérisé en ce qu'il comporte un turbo-compresseur (12) conforme à l'une des revendications 1 à 12, ce turbo-compresseur comportant une turbine hdyraulique (56) actionnée au moyen d'un fluide d'entraînement fourni par un système hydraulique du moteur (14).

14. Moteur selon la revendication 13, caractérisé en ce que le système hydraulique du moteur (14) alimente en lubrifiant divers organes du moteur, outre le débit de fluide d'entraînement qu'il fournit à la turbine hydraulique (56).

FIG-1

FIG-3

FIG-4

FIG-5

FIG-6

Fig-2

FIG-7

FIG-8

FIG-9